# EUROPÄISCHE PATENTSCHRIFT

(11) **EP 3 540 507 B1**
(45) Veröffentlichungstag und Bekanntmachung des Hinweises auf die Patenterteilung: **06.12.2023**
(21) Anmeldenummer: 19163226.4
(22) Anmeldetag: 15.03.2019
(51) Int. Cl.: G03B 15/07, G07D 7/121, G03B 17/56

(54) **BILDAUFNAHMEVORRICHTUNG UND VERFAHREN ZUM AUFNEHMEN EINER BILDAUFNAHME EINES DOKUMENTS UND VERWENDUNG**
IMAGING APPARATUS AND METHOD FOR TAKING AN IMAGE OF A DOCUMENT AND USE THEREOF
DISPOSITIF DE PRISE D'IMAGE ET PROCÉDÉ DE PRISE D'UNE IMAGE D'UN DOCUMENT ET UTILISATION

(30) Priorität: 16.03.2018 DE 102018106181
(43) Veröffentlichungstag der Anmeldung: 18.09.2019
(73) Patentinhaber: Bundesdruckerei GmbH, 10969 Berlin (DE)
(72) Erfinder: WOLF, Andreas, 13158 Berlin (DE); RABELER, Uwe, 30453 Hannover (DE)
(74) Vertreter: Bittner, Thomas L.

(56) Entgegenhaltungen:
- DE-A1-102014 205 363
- US-A1- 2004 036 841
- US-A1- 2008 122 936
- US-A1- 2015 142 409

## Beschreibung

Die Erfindung betrifft eine Bildaufnahmevorrichtung und ein Verfahren zum Aufnehmen einer Bildaufnahme eines Dokuments sowie die Verwendung.

### Hintergrund

Derartige Bildaufnahmevorrichtungen und Verfahren werden genutzt, um Bildaufnahmen von Identitätsdokumenten zu machen. Die erfassten Bildaufnahmen können dann zu verschiedenen Zwecken genutzt werden, beispielsweise zum Bestimmen eines oder mehrerer Merkmale des Identitätsdokuments, um so zum Beispiel die Echtheit des Dokuments zu verifizieren oder eine Person zu identifizieren, der das Identitätsdokument zugeordnet ist. Hierbei kann vorgesehen sein, eine aktuelle Bildaufnahme mit einer oder mehrerer Referenzbildaufnahmen zu vergleichen, die zu einem früheren Zeitpunkt gemacht wurden, zum Beispiel referenzbildaufnahmen für ein oder mehrere Merkmale des Identitätsdokuments. Von besonderer Bedeutung ist es hierbei, dass die Bildaufnahmen unter reproduzierbaren Bildaufnahme-Bedingungen durchgeführt werden. Zu den Bildaufnahme-Bedingungen kann beispielsweise die relative Positionierung einer Beleuchtungseinrichtung, mit der das Identitätsdokument beleuchtet wird, und einer Kameraeinrichtung gehören, mit der die Bildaufnahme erfasst wird.

Aus den Dokumenten DE 10 2013 103 522 A1 sowie DE 10 2013 103 527 A1 sind Bildanalysesysteme zur Bildaufnahme eines Merkmals eines Identitätsdokuments bekannt. Es ist das Erfassen von Bildaufnahmen mit unterschiedlichen Beleuchtungswinkeln ermöglicht.

In dem Dokument US 2004/0036841 A1 ist eine Einrichtung zur Aufnahme sphärischer Bilder einer Szene mit einer Befestigungsmittel für einen Bildaufnahmeapparat umfassenden Halterung offenbart. Die Halterung kann einerseits um eine im Wesentlichen vertikale Achse rlativ zu der fotografierten Szene relative rotierbar sein und andererseits sind die Befestigungsmittel relativ zu einer im Wesentlichen horizontalen Achse in Rotation beweglich. Weiterhin ist sie mit Mitteln bereitgestellt, welche ein Aufhängen über der zu fotografierenden Szene erlauben.

Das Dokument US 2008/0122936 A1 betrifft ein System mit einer mehrachsige Translations- und Orientierungsfunktion für die optische Abbildung. Das System umfasst eine optische Abbildungsvorrichtung, die ein Signal bereitstellt, das ein digitalisiertes Bild darstellt, und einen mechanischen Rahmen. Der Rahmen enthält einen ersten Satz von Gelenkverbindungen, die in der Lage sind, die optische Abbildungsvorrichtung unabhängig in mehrere lineare Richtungen zu verschieben. Das System umfasst auch einen zweiten Satz von Gelenkverbindungen, die als Gelenke ausgebildet sind und mindestens drei unabhängige Rotationsgrade der optischen Abbildungsvorrichtung bereitstellen. Das System stellt auch eine Öffnung bereit, die konfiguriert ist, um zu ermöglichen, dass der Rahmen um einen Patienten herum positioniert wird, so dass ein Isozentrum einem interessierenden Bereich des Patienten entspricht, und umfasst eine Beleuchtungsquelle, die an dem Rahmen angebracht ist und konfiguriert ist, um Beleuchtung in Richtung des Isozentrums zu lenken. Das System umfasst auch ein Kamerasystem, das sich neben der Beleuchtungsquelle befindet und eine Fokusebene im Isozentrum aufweist.

Das Dokument US 2015/0142409 A1 beschreibt einen Ansatz zum Simulieren eines fotografischen Aufbaus, bei dem ein Computer Informationen empfängt, die einen ersten Gerätetyp beschreiben. Der Computer bestimmt, dass der empfangene erste Gerätetyp nicht in einer Gerätedatenbank enthalten ist. Der Computer fügt den ersten Gerätetyp in die Gerätedatenbank ein. Der Computer empfängt eine Auswahl eines oder mehrerer Gerätetypen. Der eine oder die mehreren ausgewählten Gerätetypen sind in der Gerätedatenbank enthalten und enthalten den ersten Gerätetyp. Der Computer empfängt eine Konfiguration für jeden der mehreren ausgewählten Gerätetypen. Der Computer erstellt eine Simulation eines fotografischen Aufbaus. Die Simulation basiert auf dem einen oder den mehreren ausgewählten Gerätetypen und den empfangenen Konfigurationen.

### Zusammenfassung

Aufgabe der Erfindung ist es, eine Bildaufnahmevorrichtung und ein Verfahren zum Aufnehmen einer Bildaufnahme eines Dokuments zu schaffen, bei denen reproduzierbare Bildaufnahme-Bedingungen auf effiziente Art und Weise bereitgestellt sind.

Zur Lösung der Aufgabe sind eine Bildaufnahmevorrichtung sowie ein Verfahren zum Aufnehmen einer Bildaufnahme eines Dokuments nach den unabhängigen Ansprüchen 1 und 11 geschaffen. Ausgestaltungen sind Gegenstand von abhängigen Unteransprüchen.

Nach einem Aspekt ist eine Bildaufnahmevorrichtung zum Aufnehmen einer Bildaufnahme eines Dokuments geschaffen. Die Bildaufnahmevorrichtung weist eine Auf- oder Ablageeinrichtung auf, die eingerichtet ist, ein Dokument für eine Bildaufnahme eines Merkmals des Identitätsdokuments ortsfest aufzunehmen. Eine Beleuchtungseinrichtung weist eine Lichtquelle zum Beleuchten des Dokuments für die Bildaufnahme auf, wenn dieses auf der Auflageeinrichtung abgelegt ist, und ist relativ zu dem Dokument in einer ersten Bewegungs-Sphäre verlagerbar, die sich zentriert zu einer Mitte des abgelegten Dokuments gegenüber dem Dokument im Wesentlichen halbkugelförmig aufspannt. Es ist eine Kameraeinrichtung vorgesehen, die eingerichtet ist, die Bildaufnahme des Dokuments zu erfassen, wenn dieses auf der Auflageeinrichtung abgelegt ist. Die Kameraeinrichtung ist relativ zu dem Dokument und der Beleuchtungseinrichtung in einer zweiten Bewegungs-Sphäre verlagerbar, die sich zentriert zur Mitte des abgelegten Dokuments gegenüber dem Dokument im Wesentlichen halbkugelförmig aufspannt. Die Bildaufnahmeeinrichtung weist eine Speichereinrichtung auf, die eingerichtet ist, der Bildaufnahme zugeordnete erste Positionsdaten, die eine Stellung der Beleuchtungseinrichtung in der ersten Bewegungs-Sphäre beim Aufnehmen oder Erfassen der Bildaufnahme anzeigen, und zweite Positionsdaten zu speichern, die eine Stellung der Kameraeinrichtung in der zweiten Bewegungs-Sphäre beim Erfassen der Bildaufnahme anzeigen.

Nach einem weiteren Aspekt ist ein Verfahren zum Aufnehmen einer Bildaufnahme eines Dokuments geschaffen, wobei das Verfahren Folgendes aufweist: ortsfestes Ablegen eines Dokuments für eine Bildaufnahme eines Merkmals des Identitätsdokuments auf einer Auflageeinrichtung; Beleuchten des Dokuments mit einer Beleuchtungseinrichtung, die eine Lichtquelle zum Beleuchten des Dokuments für die wenigstens eine Bildaufnahme aufweist, wenn dieses auf der Auflageeinrichtung abgelegt ist, und die zum Einstellen relativ zu dem Dokument in einer ersten Bewegungs-Sphäre verlagert wird, die sich zentriert zu einer Mitte des abgelegten Dokuments gegenüber dem Dokument im Wesentlichen halbkugelförmig aufspannt; Erfassen der Bildaufnahme des Dokuments mit einer Kameraeinrichtung, die zum Einstellen vor der Bildaufnahme relativ zu dem Dokument und der Beleuchtungseinrichtung in einer zweiten Bewegungs-Sphäre verlagert wird, die sich zentriert zur Mitte des abgelegten Dokuments gegenüber dem Dokument im Wesentlichen halbkugel-förmig aufspannt; und Speichern von der Bildaufnahme zugeordneten ersten Positionsdaten, die eine Stellung der Beleuchtungseinrichtung in der ersten Bewegungs-Sphäre beim Erfassen der Bildaufnahme anzeigen, und zweiten Positionsdaten, die eine Stellung der Kameraeinrichtung in der zweiten Bewegungsebene beim Erfassen der Bildaufnahme anzeigen, in einer Speichereinrichtung.

Die Verlagerbarkeit der Beleuchtungseinrichtung und der Kameraeinrichtung relativ zueinander sowie relativ zu dem Dokument auf der Auflageeinrichtung ermöglicht einerseits das Einstellen unterschiedlicher Bildaufnahme-Bedingungen. Andererseits sind die hierbei von der Beleuchtungseinrichtung und der Kameraeinrichtung eingenommenen Stellungen reproduzierbar, indem die ersten und die zweiten Positionsdaten bei einer (späteren) Bildaufnahme herangezogen werden. Insgesamt sind effizient reproduzierbare Bildaufnahme-Bedingungen bereitgestellt.

Mithilfe des vorgeschlagenen Verfahrens können ein oder mehrere Bildaufnahmen für gleiche oder unterschiedliche Stellungen oder Positionen der Beleuchtungseinrichtung und / oder der Kameraeinrichtung aufgenommen werden. Einer einzelnen Bildaufnahme oder einer Folge von Bildaufnahmen werden die ersten und die zweiten Positionsdaten zugeordnet und in dieser zugeordneten Art und Weise in der Speichereinrichtung abgelegt. Die Zuordnung zwischen der Bildaufnahme und den Positionsdaten kann beispielsweise mithilfe eines Index in der Speichereinrichtung erfolgen. Auf diese Weise sind die Positionsdaten für die Beleuchtungseinrichtung und die Kameraeinrichtung elektronisch hinterlegt und stehen für ein Einstellen der Bildaufnahmevorrichtung bei einer späteren Bildaufnahme zur Verfügung, sodass diese für gleiche Bildaufnahme-Bedingungen hergerichtet wird.

Wird eine Folge von Bildaufnahmen aufgenommen, beispielsweise eine Folge von aufeinanderfolgenden Bilder-Frames, können für jede der Bildaufnahmen in der Folge zugeordnete erste und zweite Positionsdaten gespeichert werden, wobei die Positionsdaten sich für die Bildaufnahmen unterscheiden, wenn zwischen den Bildaufnahmen die Beleuchtungseinrichtung und / oder die Kameraeinrichtung verlagert werden.

Die eine oder die mehreren Bildaufnahmen können einer Bildanalyse unterzogen werden, insbesondere einer digitalen Bildanalyse, um ein oder mehrere Bildmerkmale (Dokumentmerkmale) zu bestimmen, beispielsweise ein oder mehrere Merkmale des Dokuments, zum Beispiel eines Identitätsdokuments. Die Bildaufnahme insgesamt und / oder hieraus bestimmte Merkmale können mit Referenzdaten (Referenzbildaufnahme, Referenzmerkmale) verglichen werden, wozu eine Auswerteeinrichtung nutzbar ist, die beispielsweise ein oder mehrere Prozessoren für eine Datenverarbeitung sowie einen Speicher aufweist, in dem zum Beispiel die Referenzdaten abgelegt sein können.

Das Dokument kann ein zweidimensionales Objekt sein, zum Beispiel ein Identitätsdokument. Das zweidimensionale Objekt kann im Wesentlichen zum Bestimmen der Identität einer Person dienen. Es kann hierbei zum Beispiel ein Reisedokument, beispielweise ein Reisepass, eine Identitätskarte, beispielsweise ein deutscher Personalausweis oder Führerschein, oder eine Personstandsurkunde sein, beispielweise Geburts-, Heirats- oder Sterbeurkunde. Darüber hinaus kann es auch eine Urkunde, zu Beispiel Kfz-Brief oder notarielle Beglaubigung, oder eine Banknote sein.

Die Beleuchtungseinrichtung kann mehrere Lichtquellen aufweisen. Die Lichtquellen können zum Beleuchten Licht unterschiedlicher Spektralbereiche und / oder mit verschiedenen Polarisationsrichtungen bereitstellend ausgeführt sein.

Die Formulierung Bewegungs-Sphäre in der hier verwendeten Bedeutung betrifft allgemein eine Verlagerung oder Positionierung in einem dreidimensionalen Bewegungsraum, die gewölbt oder gekrümmt sein kann. Die Bewegungs-Sphäre kann zum Beispiel im Wesentlichen einem Abschnitt einer Kugeloberfläche entsprechen, beispielweise einer Halbkugelfläche.

Die erste und die zweite Bewegungs-Sphäre können zusammenfallen. Bei dieser Ausführungsform sind die Beleuchtungseinrichtung und die Kameraeinrichtung in einer gemeinsamen Bewegungsebene gegenüber dem Dokument verlagerbar. Kameraeinrichtung und Beleuchtungseinrichtung können an verschiedenen Orten getrennt voneinander angeordnet sein.

Ein Abstand zwischen der Kameraeinrichtung und dem Dokument auf der Auflageeinrichtung kann bei der Bildaufnahme etwa 30cm bis etwa 60cm betragen, bevorzugt etwa 40cm bis etwa 50cm. Auf diese Weise wird bei der Bildaufnahme die Ausbildung einer verbesserten Schärfentiefe unterstützt. Der Abstand zwischen dem Dokument und der Kameraeinrichtung ist ausreichend groß. Andererseits ist der Anforderung genüge getan, die Bildaufnahmevorrichtung in ihren Gesamtmessungen nicht zu groß gestalten zu müssen. Alternativ oder ergänzend kann vorgesehen sein, den Strahlengang beim Erfassen der Bildaufnahme zu falten oder Bildaufnahmen mit verschiedenen Schärfetiefen aufzunehmen und anschließend zu verrechnen. Dies kann zum Beispiel mittels aufeinanderfolgender Fokussierung auf mehrere konzentrische Ringe in einer abbildenden Ebene und anschließender Überlagerung der jeweils scharfen Pixel erreicht werden.

Die Beleuchtungseinrichtung kann eingerichtet sein, das Dokument für die Bildaufnahme mit im Wesentlichen parallelen Lichtstrahlen zu beleuchten. Die im Wesentlichen parallelen Lichtstrahlen können mithilfe der Beleuchtungseinrichtung bereitgestellt werden, indem beispielsweise eine Lichtformeinrichtung das Licht aus der Lichtquelle vor dem Abstrahlen auf das Dokument formt. Eine Lichtformeinrichtung ist beispielsweise aus dem Dokument DE 10 2014 205 363 A1 bekannt.

Die Beleuchtungseinrichtung kann einen flächigen Lichtstrahler aufweisen. Dieser kann eingerichtet sein, auf dem Dokument eine im Wesentlichen homogene Lichtverteilung zu erzeugen. Die Beleuchtungseinrichtung kann beispielsweise mit einer Beleuchtungsplatte gebildet sein, wie sie zum Beispiel im Dokument DE 10 2014 205 363 A1 als solche beschrieben ist.

Die Beleuchtungseinrichtung kann eingerichtet sein, das Dokument mit Licht unterschiedlicher Wellenlängen zu beleuchten. Beispielsweise kann Licht im sichtbaren Wellenlängenbereich, im nahen Infrarot-Bereich und / oder im UV-Bereich verwendet werden. Bei dem Verfahren kann dann vorgesehen sein, Bildaufnahmen des Dokuments bei Beleuchtung mit Licht unterschiedlicher Wellenlängen aufzunehmen.

Die Kameraeinrichtung kann mehrere Kameras aufweisen, und die Speichereinrichtung kann eingerichtet sein, der Bildaufnahme zugeordnete zweite Positionsdaten für die mehreren Kameras zu speichern, die eine jeweilige Stellung der mehreren Kameras in der zweiten Bewegungs-Sphäre beim Aufnehmen oder Erfassen der Bildaufnahme anzeigen. Bei dieser oder anderen Ausführungsformen kann die Nutzung ein oder mehrerer optischer Filter vorgesehen sein, die eingerichtet sind, nur Licht bestimmter Wellenlänge durchzulassen oder zu sperren, beispielsweise zum Blocken von Licht anderer Wellenlängen, derart, dass dieses nicht auf die Kamera einfällt. Wenn an verschiedenen Kameras unterschiedliche optische Filter verwendet werden, können mit den Kameras jeweils Bildaufnahmen für Beleuchtungslicht unterschiedlicher Wellenlängen aufgenommen werden.

Die Beleuchtungseinrichtung und die Kameraeinrichtung sind zum Verlagern in der ersten oder der zweiten Bewegungsebene auf einem zugeordneten Tragarm mit einer Viertel- oder Halbkreisform angeordnet, wobei der zugeordnete Tragarm um eine Drehachse drehbar ist. Die Drehachse kann senkrecht auf der Oberfläche des abgelegten Dokuments stehen.

Die Beleuchtungseinrichtung in der ersten Bewegungs-Sphäre und / oder die Kameraeinrichtung in der zweiten Bewegungs-Sphäre können mittels einer jeweiligen Stelleinrichtung verlagerbar sein. Die Stelleinrichtungen können mit einem jeweiligen Stellmotor gebildet sein, der ansteuerbar ist, um die Beleuchtungseinrichtung und / oder die Kameraeinrichtung in eine gewünschte Position oder Stellung für die Bildaufnahme zu verlagern. Hierbei können Benutzereingaben oder -einstellungen ausgewertet werden, um Steuersignale für das Verlagern der Beleuchtungseinrichtung und / oder der Kameraeinrichtung zu erzeugen. So kann der Benutzer über eine Benutzerschnittstelle eine Benutzereingabe machen, die eine gewünschte Stellung oder Position anzeigt, worauf ausgehend von der Benutzereingabe Steuersignale für die oder den Stellmotor erzeugt werden. Es kann alternativ oder ergänzend vorgesehen sein, dass die Stellmotoren mit Positionsgebern versehen sind, die Positionssignale für die jeweilige Stellung oder Position der Beleuchtungseinrichtung und / oder der Kameraeinrichtung ausgeben, die dann zum Bestimmen der ersten und / oder der zweiten Positionsdaten herangezogen werden können.

Es kann vorgesehen sein, dass in Ergänzung zu den der Bildaufnahme zugeordneten ersten Positionsdaten erste Einstellungsdaten in der Speichereinrichtung gespeichert werden, die Meta-Daten bilden können. Weiterhin kann vorgesehen sein, dass in Ergänzung zu den der Bildaufnahme zugeordneten zweiten Positionsdaten zweite Einstellungsdaten in der Speichereinrichtung gespeichert werden. Die Einstellungsdaten, deren Zuordnung zu den Bildaufnahmen vergleichbar den Positionsdaten ausgeführt werden kann, geben in Ergänzung zu den Positionsdaten für die Beleuchtungseinrichtung und / oder die Kameraeinrichtung Parameter betreffend die jeweilige Einstellung bei den Bildaufnahmen an und können zum Beispiel einen oder mehrere Einstellparameter aus der folgenden Gruppe anzeigen: ein verwendetes Lichtspektrum, eine für die Bildaufnahmen eingestellte Lichtintensität, eine Polarisationsebene, einen oder mehrere verwendete Filter, einen oder mehrere Kameraparameter wie zum Beispiel Blende, Brennweite und / oder Belichtungszeit.

In Verbindung mit dem Verfahren zum Aufnehmen der Bildaufnahme eines Identitätsdokuments können die vorangehend im Zusammenhang mit der Bildaufnahmevorrichtung beschriebenen Ausgestaltungen entsprechend vorgesehen sein.

Bei der Verwendung des Verfahrens zum Bestimmen eines oder mehrerer Merkmale des Identitätsdokuments können das oder die im Rahmen der digitalen Bildanalyse bestimmten Merkmale des Identitätsdokuments mithilfe einer Auswerteeinrichtung weiter ausgewertet werden. Beispielsweise kann das Merkmal mit einem Referenzmerkmal verglichen werden, um die Echtheit des Identitätsdokuments zu verifizieren und / oder eine Person zu identifizieren, der das Identitätsdokument zugeordnet ist.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische perspektivische Darstellung einer Bildaufnahmevorrichtung und
- Fig. 2: eine schematische Darstellung einer weiteren Bildaufnahmevorrichtung.

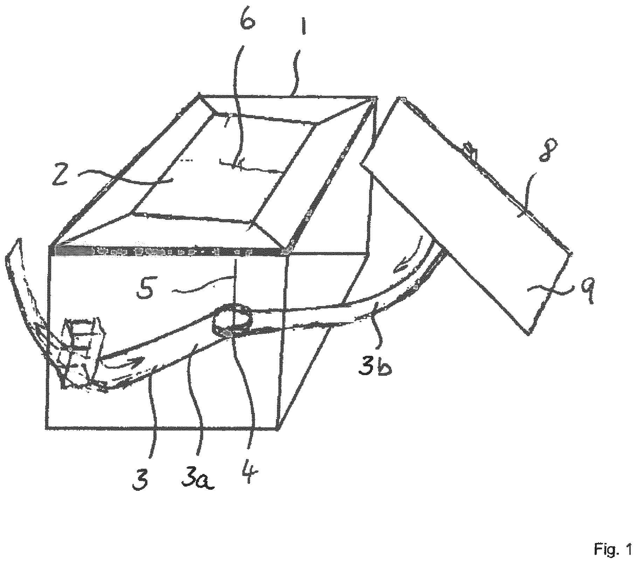

Fig. 1 zeigt eine schematische perspektivische Darstellung einer Bildaufnahmevorrichtung mit einer Auflageeinrichtung 1, auf der ein als Identitätsdokument ausgeführtes Dokument 2 abgelegt ist, derart, dass eine mithilfe einer Bildaufnahme zu erfassende Oberfläche des Dokuments 2 nach unten zeigt. Unterhalb des Dokuments 2 ist eine Trageinrichtung 3 mit einem ersten und einem zweiten Tragarm 3a, 3b angeordnet, die jeweils mithilfe eines Drehgelenks 4 um eine Drehachse 5 drehbar sind, die aufrecht auf einer Mitte 6 des Dokuments 2 steht.

An dem ersten Tragarm 3a, der mit einer Viertelkreisform gebildet ist, ist eine Kameraeinrichtung 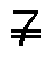 aufgenommen, die entlang des ersten Tragarms 3a verlagerbar ist. Mittels des Verlagerns in unterschiedliche Stellungen oder Positionen entlang des ersten Tragarms 3 kann die optische Achse der Kameraeinrichtung verschiedene Winkel zur Oberfläche des Dokuments 2 einnehmen.

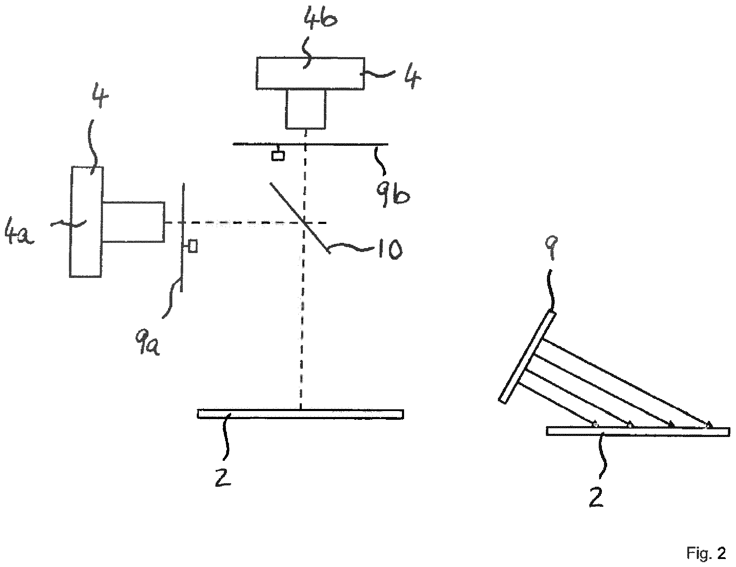

Vergleichbar ist eine Beleuchtungseinrichtung 8, die bei der gezeigten Ausführungsform mit einer Beleuchtungsplatte 9 gebildet ist, an dem zweiten Tragarm 3b aufgenommen. Die Beleuchtungseinrichtung 8 ist an dem eine Viertelkreisform aufweisenden zweiten Tragarm 3b entlang des Tragarms verlagerbar, sodass für die von der Beleuchtungseinrichtung 8 abgegebenen Lichtstrahlen unterschiedliche Einfallswinkel auf die Oberfläche des Dokuments 2 eingestellt werden können. Die Beleuchtungseinrichtung 8 ist eingerichtet, im Wesentlichen parallele Lichtstrahlen abzugeben. Hierzu kann die Beleuchtungsplatte 9 beispielsweise ausgeführt sein, wie dies beispielhaft in dem Dokument DE 10 2014 205 363 A1 beschrieben ist. Schematisch dargestellt ist ein solcher Lichteinfall auf der rechten Seite in Fig. 2.

Mittels der Verlagerung entlang des jeweils zugeordneten Tragarms 3a, 3b sowie des Drehens um die Drehachse 5 können die Kameraeinrichtung 4 und die Beleuchtungseinrichtung 8 jeweils auf einer halbkugelförmig gebildeten Bewegungsebene in Bezug auf die erfassende Oberfläche des Dokuments 2 verlagert werden. Für die jeweilige Verlagerungsposition werden erste und zweite Positionsdaten bereitgestellt, die die Position der Kameraeinrichtung 4 sowie der Beleuchtungseinrichtung 8 in Bezug auf das Dokument 2, insbesondere die Mitte 6 des Dokuments 2, angeben. Hierzu kann vorgesehen sein, dass zur Verlagerung der Kameraeinrichtung 4 und der Beleuchtungseinrichtung 8 entlang des Tragarms 3a, 3b jeweils ein Stellmotor (nicht dargestellt) vorgesehen ist.

Die angewendeten Steuersignale für die Stellmotoren geben dann einen Hinweis auf die jeweils als Folge der Steuersignale eingenommene Position an. Informationen hierüber können in einer Speichereinrichtung (nicht dargestellt) zusammen mit einer oder mehreren Bildaufnahmen abgelegt werden, die aufgenommen wurden, wenn die Kameraeinrichtung 4 und die Beleuchtungseinrichtung 8 in der Position angeordnet sind, die mit den Positionsdaten angezeigt wird. Auf diese Weise besteht eine direkte Zuordnung zwischen Bildaufnahme einerseits und Positionsdaten für die Kameraeinrichtung 4 und die Beleuchtungseinrichtung 8 andererseits. Die Speichereinrichtung kann als Teil der Bildaufnahmevorrichtung ausgebildet sein. Alternativ kann eine Schnittstelle vorgesehen sein, über welche die Positionsdaten und die Bilddaten zur Bildaufnahme an eine externe Speichereinrichtung übertragen werden, die beispielsweise Bestandteil einer Auswerteeinrichtung sein kann, die ihrerseits eingerichtet ist, eine Bildanalyse durchzuführen.

Fig. 2 zeig eine schematische Darstellung einer weiteren Bildaufnahmevorrichtung, bei der die Kameraeinrichtung 4 mit einer ersten und einer zweiten Kamera 4a, 4b gebildet ist. Den beiden Kameras 4a, 4b ist ein jeweilige optischer Filter 9a, 9b vorgelagert, wobei die optischen Filter 9a, 9b jeweils Licht unterschiedlicher Wellenlängen hindurchlassen, sodass mit den beiden Kameras 4a, 4b Bildaufnahmen für Beleuchtungslicht unterschiedlicher Wellenlänge aufgenommen werden können. Die Bildaufnahmen erfolgen hierbei durch einen teildurchlässigen Spiegel 10, welcher einen jeweiligen Teil der Lichtstrahlen zur ersten Kamera 4a durchlässt und zur zweiten Kamera 4b hin ablenkt.

## Patentansprüche

1. Bildaufnahmevorrichtung zum Aufnehmen einer Bildaufnahme eines Dokuments, mit:
- einer Auflageeinrichtung (1), die eingerichtet ist, ein Dokument (2) für eine Bildaufnahme eines Merkmals des Dokuments ortsfest derart aufzunehmen, dass eine zu erfassende Oberfläche des Dokuments (2) nach unten zeigt;
- einer Beleuchtungseinrichtung (8), die eine Lichtquelle zum Beleuchten des Dokuments (2) für die Bildaufnahme aufweist, wenn dieses auf der Auflageeinrichtung (1) abgelegt ist, und die relativ zu dem Dokument (2) in einer ersten Bewegungs-Sphäre verlagerbar ist, die sich zentriert zu einer Mitte (6) des abgelegten Dokuments (2) gegenüber dem Dokument (2) im Wesentlichen halbkugelförmig aufspannt;
- einer Kameraeinrichtung (4), die eingerichtet ist, die Bildaufnahme des Dokuments (2) zu erfassen, wenn dieses auf der Auflageeinrichtung (1) abgelegt ist, und die relativ zu dem Dokument (2) und der Beleuchtungseinrichtung (8) in einer zweiten Bewegungssphäre verlagerbar ist, die sich zentriert zur Mitte (6) des abgelegten Dokuments (2) gegenüber dem Dokument (2) im Wesentlichen halbkugelförmig aufspannt; und
- einer Speichereinrichtung, die eingerichtet ist, der Bildaufnahme zugeordnete erste Positionsdaten, die eine Stellung der Beleuchtungseinrichtung (8) in der ersten Bewegungs-Sphäre beim Erfassen der Bildaufnahme anzeigen, und zweite Positionsdaten zu speichern, die eine Stellung der Kameraeinrichtung (4) in der zweiten Bewegungs-Sphäre beim Erfassen der Bildaufnahme anzeigen,
wobei
- die Beleuchtungseinrichtung (8) zum Verlagern in der ersten Bewegungs-Sphäre auf einem zugeordneten ersten Tragarm (3b) mit einer Viertel- oder Halbkreisform angeordnet ist, wobei der erste Tragarm (3b), wenn ein Dokument (2) an der Auflageeinrichtung (1) aufgenommen ist, unterhalb des Dokuments (2) angeordnet ist;
- die Kameraeinrichtung (4) zum Verlagern in der zweiten Bewegungs-Sphäre auf einem zugeordneten zweiten Tragarm (3a) mit einer Viertel- oder Halbkreisform angeordnet ist, wobei der zweite Tragarm (3a), wenn ein Dokument (2) an der Auflageeinrichtung (1) aufgenommen ist, unterhalb des Dokuments (2) angeordnet ist; und
- der erste und der zweite zugeordnete Tragarm (3a, 3b) um eine Drehachse (5) drehbar sind.

2. Bildaufnahmevorrichtung nach Anspruch 1, **dadurch gekennzeichnet, dass** die erste und die zweite Bewegungs-Sphäre zusammenfallen.

3. Bildaufnahmevorrichtung nach Anspruch 1 oder 2, **dadurch gekennzeichnet, dass** ein Abstand zwischen der Kameraeinrichtung (4) und dem Dokument (2) auf der Auflageeinrichtung (1) bei der Bildaufnahme etwa 30cm bis etwa 60cm beträgt, bevorzugt etwa 40cm bis etwa 50cm.

4. Bildaufnahmevorrichtung nach mindestens einem der vorangehenden Ansprüche, **dadurch gekennzeichnet, dass** die Beleuchtungseinrichtung (8) eingerichtet ist, das Dokument (2) für die Bildaufnahme mit im Wesentlichen parallelen Lichtstrahlen zu beleuchten.

5. Bildaufnahmevorrichtung nach mindestens einem der vorangehenden Ansprüche, **dadurch gekennzeichnet, dass** die Beleuchtungseinrichtung (8) einen flächigen Lichtstrahler (9) aufweist.

6. Bildaufnahmevorrichtung nach mindestens einem der vorangehenden Ansprüche, **dadurch gekennzeichnet, dass** die Beleuchtungseinrichtung (8) eingerichtet ist, das Dokument (2) mit Licht unterschiedlicher Wellenlängen zu beleuchten.

7. Bildaufnahmevorrichtung nach mindestens einem der vorangehenden Ansprüche, **dadurch gekennzeichnet, dass** die Kameraeinrichtung (4) mehrere Kameras (4a, 4b) aufweist und die Speichereinrichtung eingerichtet ist, der Bildaufnahme zugeordnete zweite Positionsdaten für die mehreren Kameras (4a, 4b) zu speichern, die eine jeweilige Stellung der mehreren Kameras (4a, 4b) in der zweiten Bewegungs-Sphäre beim Aufnehmen der Bildaufnahme anzeigen.

8. Bildaufnahmevorrichtung nach mindestens einem der vorangehenden Ansprüche, **dadurch gekennzeichnet, dass** die Beleuchtungseinrichtung (8) in der ersten Bewegungs-Sphäre und / oder die Kameraeinrichtung in der zweiten Bewegungs-Sphäre mittels einer jeweiligen Stelleinrichtung verlagerbar ist.

9. Bildaufnahmevorrichtung nach mindestens einem der vorangehenden Ansprüche, **dadurch gekennzeichnet, dass** die Speichereinrichtung eingerichtet ist, der Bildaufnahme zugeordnete erste Einstellungsdaten zu speichern, die eine Einstellung der Beleuchtungseinrichtung (8) beim Erfassen der Bildaufnahme anzeigen.

10. Bildaufnahmevorrichtung nach mindestens einem der vorangehenden Ansprüche, **dadurch gekennzeichnet, dass** die Speichereinrichtung eingerichtet ist, der Bildaufnahme zugeordnete zweite Einstellungsdaten zu speichern, die eine Einstellung der Kameraeinrichtung (4) beim Aufnehmen der Bildaufnahme anzeigen.

11. Verfahren zum Aufnehmen einer Bildaufnahme eines Dokuments, mit:
- ortsfestes Ablegen eines Dokuments (2) für eine Bildaufnahme eines Merkmals des Dokuments auf einer Auflageeinrichtung (1) derart, dass eine zu erfassende Oberfläche des Dokuments (2) nach unten zeigt;
- Beleuchten des Dokuments (2) mit einer Beleuchtungseinrichtung (8), die eine Lichtquelle zum Beleuchten des Dokuments (2) für die wenigstens eine Bildaufnahme aufweist, wenn dieses auf der Auflageeinrichtung (1) abgelegt ist, und die zum Einstellen relativ zu dem Dokument (2) in einer ersten Bewegungs-Sphäre verlagert wird, die sich zentriert zu einer Mitte (6) des abgelegten Dokuments (2) gegenüber dem Dokument (2) im Wesentlichen halbkugelförmig aufspannt;
- Erfassen der Bildaufnahme des Dokuments (2) mit einer Kameraeinrichtung, die zum Einstellen vor der Bildaufnahme relativ zu dem Dokument (2) und der Beleuchtungseinrichtung (8) in einer zweiten Bewegungs-Sphäre verlagert wird, die sich zentriert zur Mitte (6) des abgelegten Dokuments (2) gegenüber dem Dokument (2) im Wesentlichen halbkugelförmig aufspannt; und
- Speichern von der Bildaufnahme zugeordneten ersten Positionsdaten, die eine Stellung der Beleuchtungseinrichtung (8) in der ersten Bewegungs-Sphäre beim Erfassen der Bildaufnahme anzeigen, und zweiten Positionsdaten, die eine Stellung der Kameraeinrichtung in der zweiten Bewegungs-Sphäre beim Erfassen der Bildaufnahme anzeigen, in einer Speichereinrichtung,
wobei
- die Beleuchtungseinrichtung (8) in der ersten Bewegungs-Sphäre auf einem unterhalb des Dokuments (2) angeordneten zugeordneten ersten Tragarm (3b) mit einer Viertel- oder Halbkreisform, auf welchem die Beleuchtungseinrichtung (8) angeordnet ist, verlagert wird;
- die Kameraeinrichtung (4) in der zweiten Bewegungs-Sphäre auf einem unterhalb des Dokuments (2) angeordneten zugeordneten zweiten Tragarm (3a) mit einer Viertel- oder Halbkreisform, auf welchem die Kameraeinrichtung (4) angeordnet ist, verlagert wird; und
- der erste und der zweite zugeordnete Tragarm (3a, 3b) um eine Drehachse (5) gedreht werden.

12. Verwendung eines Verfahrens nach Anspruch 11 zum Bestimmen eines Merkmals eines Dokuments, wobei bei dem Verfahren mithilfe einer Auswerteinrichtung eine digitale Bildanalyse der Bildaufnahme ausgeführt wird und bei der digitalen Bildanalyse ein Merkmal des Dokuments bestimmt wird.

## Claims

1. Image capturing device for capturing an image of a document, comprising:
- a support device (1) that is configured to hold a document (2) in place for capturing an image of a feature of the document, in such a manner that a surface of the document (2) to be captured faces downwards;
- an illumination device (8) that has a light source for illuminating the document (2) for capturing the image when said document is placed on the support device (1), and is movable relative to the document (2) in a first movement sphere that extends centred in respect of a midpoint (6) of the positioned document (2) and substantially hemispherical relative to the document (2);
- a camera device (4) that is configured to capture the image of the document (2) when said document is placed on the support device (1) and that is movable relative to the document (2) and the illumination device (8) in a second movement sphere that extends centred in respect of the midpoint (6) of the positioned document (2) and substantially hemispherical relative to the document (2); and
- a storage device that is configured to store first position data associated with the image, which data indicate a position of the illumination device (8) within the first movement sphere when the image is being captured, and second position data which indicate a position of the camera device (4) within the second movement sphere when the image is being captured,
wherein
- the illumination device (8) is arranged for movement within the first movement sphere on an associated first support arm (3b) with a quarter-circle or half-circle shape, wherein the first support arm (3b) is arranged below the document (2) when said document (2) is placed on the support device (1);
- the camera device (4) is arranged for movement within the second movement space on an associated second support arm (3a) with a quarter-circle or half-circle shape, wherein the second support arm (3a) is arranged below the document (2) when said document (2) is placed on the support device (1); and
- the first and the second associated support arms (3a, 3b) are rotatable about an axis of rotation (5).

2. Image capturing device according to Claim 1, **characterized in that** the first and the second movement spheres coincide.

3. Image capturing device according to Claim 1 or 2, **characterized in that** a distance between the camera device (4) and the document (2) on the support device (1) while the image is being captured is approximately 30 cm to approximately 60 cm, preferably approximately 40 cm to approximately 50 cm.

4. Image capturing device according to at least one of the preceding claims, **characterized in that** the illumination device (8) is configured to illuminate the document (2) for capturing the image with substantially parallel light beams.

5. Image capturing device according to at least one of the preceding claims, **characterized in that** the illumination device (8) has a planar light emitter (9).

6. Image capturing device according to at least one of the preceding claims, **characterized in that** the illumination device (8) is configured to illuminate the document (2) with light of different wavelengths.

7. Image capturing device according to at least one of the preceding claims, **characterized in that** the camera device (4) comprises multiple cameras (4a, 4b) and the storage device is configured to store second position data associated with the image capture for the multiple cameras (4a, 4b), which data indicate a respective position of the multiple cameras (4a, 4b) in the second movement sphere while the image is being captured.

8. Image capturing device according to at least one of the preceding claims, **characterized in that** the illumination device (8) can be moved in the first movement sphere and/or the camera device can be moved in the second movement sphere by means of a respective adjustment device.

9. Image capturing device according to at least one of the preceding claims, **characterized in that** the storage device is configured to store first setting data associated with the image, which data indicate a setting of the illumination device (8) during the capture of the image.

10. Image capturing device according to at least one of the preceding claims, **characterized in that** the storage device is configured to store second setting data associated with the image, which data indicate a setting of the camera device (4) during the capture of the image.

11. Method for capturing an image of a document, comprising:
- placing a document (2) securely in place for capturing an image of a feature of the document on a support device (1), in such a manner that a surface of the document (2) to be captured faces downwards;
- illuminating the document (2) using an illumination device (8) which has a light source for illuminating the document (2) for the at least one image capture, when said document is placed on the support device (1), and which, for setting, is moved relative to the document (2) in a first movement sphere that extends centred in respect of a midpoint (6) of the positioned document (2) and substantially hemispherical relative to the document (2);
- capturing the image of the document (2) using a camera device which, for setting prior to the image capture, is moved relative to the document (2) and the illumination device (8) in a second movement sphere that extends centred in respect of the midpoint (6) of the positioned document (2) and substantially hemispherical relative to the document (2); and
- storing, in a storage device, first position data associated with the image, which data indicate a position of the illumination device (8) within the first movement sphere when the image is being captured, and second position data which indicate a position of the camera device within the second movement sphere when the image is being captured,
wherein
- the illumination device (8) is moved within the first movement sphere on an associated first support arm (3b) arranged below the document (2) with a quarter-circle or half-circle shape, on which the illuminating device (8) is arranged;
- the camera device (4) is moved within the second movement sphere on an associated second support arm (3a) arranged below the document (2) with a quarter-circle or half-circle shape, on which the camera device (4) is arranged; and
- the first and the second associated support arms (3a, 3b) are rotated about an axis of rotation (5).

12. Use of a method according to Claim 11 for determining a feature of a document, wherein a digital image analysis of the captured image is performed as part of the method with the help of an evaluation device and a feature of the document is determined during digital image analysis.

## Revendications

1. Dispositif d'enregistrement d'images pour enregistrer une image d'un document, comportant :
- un dispositif de support (1), qui est configuré pour enregistrer un document (2) de manière stationnaire en vue d'une capture d'image d'une caractéristique du document de telle manière qu'une surface de détection du document (2) soit tournée vers le bas ;
- un dispositif d'éclairage (8), qui comporte une source de lumière pour éclairer le document (2) pour l'enregistrement d'image lorsqu'il est placé sur le dispositif de support (1), et qui peut être déplacé par rapport au document (2) dans une première sphère de le mouvement, qui est centrée sur un centre (6) du document mémorisé (2) et s'étend sur une forme sensiblement hémisphérique par rapport au document (2) ;
- un dispositif de caméra (4), qui est configuré pour enregistrer l'image du document (2) à détecter lorsqu'il est posé sur le dispositif de support (1), et qui peut être déplacé par rapport au document (2) et au dispositif d'éclairage (8) dans une deuxième sphère de mouvement, centrée sur le centre (6) du document mémorisé (2) présente une forme essentiellement hémisphérique par rapport au document (2) ; et
- un dispositif de mémorisation, qui est configuré pour mémoriser des premières données de position attribuées au premier enregistrement d'image qui indiquent une position du dispositif d'éclairage (8) dans la première sphère de mouvement lors de la capture de l'enregistrement d'image, et des deuxièmes données de position qui indiquent une position du dispositif de caméra (4) dans la deuxième sphère de mouvement lors de la capture de l'enregistrement d'image,
dans lequel
- le dispositif d'éclairage (8) est disposé sur un premier bras de support (3b) associé en forme de quart ou de demi-cercle pour se déplacer dans la première sphère de mouvement, dans lequel le premier bras de support (3b), lorsqu'un document (2) est placé sur le dispositif de support (1), est disposé en dessous du document (2);
- le dispositif de caméra (4) est disposé sur un deuxième bras de support (3a) associé en forme de quart ou de demi-cercle pour se déplacer dans la deuxième sphère de mouvement, dans lequel le deuxième bras de support (3a), lorsqu'un document (2) est placé sur le dispositif de support (1), est disposé sous le document (2) ; et
- les premier et deuxième bras de support associés (3a, 3b) peuvent tourner autour d'un axe de rotation (5).

2. Dispositif d'enregistrement d'images selon la revendication 1, **caractérisé en ce que** les première et deuxième sphères de mouvement coïncident.

3. Dispositif d'enregistrement d'images selon la revendication 1 ou 2, **caractérisé en ce que** une distance entre le dispositif de caméra (4) et le document (2) sur le dispositif de support (1) lors de la prise de l'image est d'environ 30 cm à environ 60 cm, de préférence d'environ 40 cm à environ 50 cm.

4. Dispositif d'enregistrement d'images selon au moins une des revendications précédentes, **caractérisé en ce que** le dispositif d'éclairage (8) est configuré pour éclairer le document (2) avec des rayons lumineux essentiellement parallèles pour l'enregistrement d'image.

5. Dispositif d'enregistrement d'images selon une au moins des revendications précédentes, **caractérisé en ce que** le dispositif d'éclairage (8) comporte un émetteur de lumière plat (9).

6. Dispositif d'enregistrement d'images selon une au moins des revendications précédentes, **caractérisé en ce que** le dispositif d'éclairage (8) est agencé pour éclairer le document (2) avec une lumière de différentes longueurs d'onde.

7. Dispositif d'enregistrement d'images selon au moins une des revendications précédentes, **caractérisé en ce que** le dispositif de caméra (4) comporte plusieurs caméras (4a, 4b) et le dispositif de mémorisation est configuré pour mémoriser des deuxièmes données de position affectées à l'enregistrement d'images pour les multiples caméras (4a, 4b), qui affichent une position respective des multiples caméras (4a, 4b) dans la deuxième sphère de mouvement lors de l'enregistrement de l'image.

8. Dispositif d'enregistrement d'images selon une au moins des revendications précédentes, **caractérisé en ce que** le dispositif d'éclairage (8) dans la première sphère de mouvement et/ou le dispositif de caméra dans la deuxième sphère de mouvement peuvent être déplacés au moyen d'un dispositif de réglage respectif.

9. Dispositif d'enregistrement d'images selon une au moins des revendications précédentes, **caractérisé par le fait que** le dispositif de mémorisation est configuré pour enregistrer l'image pour mémoriser des premières données de réglage attribuées à l'enregistrement, qui indiquent un réglage du dispositif d'éclairage (8) lors de l'enregistrement de l'image.

10. Dispositif d'enregistrement d'images selon une au moins des revendications précédentes, **caractérisé en ce que** le dispositif de mémorisation est configuré pour mémoriser des deuxièmes données de réglage affectées à l'enregistrement d'image, ce qui affichent un réglage de la caméra (4) lors de l'enregistrement de l'image.

11. Procédé d'enregistrement d'image d'un document, comprenant de :
- poser de manière stationnaire un document (2) pour un enregistrement d'image d'une caractéristique du document sur un dispositif de support (1) de sorte que qu'une surface du document (2) à détecter soit tournée vers le bas ;
- éclairer le document (2) avec un dispositif d'éclairage (8), qui comporte une source de lumière pour éclairer le document (2) pour ledit au moins un enregistrement d'image lorsqu'il est posé sur le dispositif de support (1), et qui se déplace pour le réglage par rapport au document (2) dans une première sphère de mouvement, qui est centrée par rapport à un centre (6) du document posé (2) de manière essentiellement hémisphérique par rapport au document (2) ;
- capturer l'enregistrement d'image du document (2) avec un appareil photo, qui est déplacé pour le réglage avant l'enregistrement d'image par rapport au document (2) et au dispositif d'éclairage (8) dans une deuxième sphère de mouvement, qui est centrée par rapport au centre (6) du document mémorisé (2) du document posé (2) de manière essentiellement hémisphérique ; et
- mémoriser les premières données de position attribuées à l'enregistrement d'image, qui indiquent une position du dispositif d'éclairage (8) dans la première sphère de mouvement lors de la capture de l'enregistrement d'image, et de deuxièmes données de position, qui indiquent une position du dispositif de caméra dans la deuxième sphère de mouvement lors de la capture de l'enregistrement d'image, dans un périphérique de mémorisation,
dans lequel
- le dispositif d'éclairage (8) se déplace dans la première sphère de mouvement sur un premier bras de support (3b) associé disposé au-dessous du document (2) en forme de quart ou de demi-cercle, sur lequel est disposé le dispositif d'éclairage (8) ;
- le dispositif de caméra (4) se déplace dans la deuxième sphère de mouvement sur un deuxième bras de support (3a) associé disposé au-dessous du document (2) en forme de quart ou de demi-cercle, sur lequel le dispositif de caméra (4) est disposé; et
- les premier et deuxième bras de support associés (3a, 3b) tournent autour d'un axe de rotation (5).

12. Utilisation d'un procédé selon la revendication 11 pour déterminer une caractéristique d'un document, dans lequel dans le procédé une analyse d'image numérique de l'enregistrement d'image est effectuée à l'aide d'un dispositif d'évaluation et dans l'analyse d'image numérique les caractéristiques du document sont déterminées.
